# EUROPÄISCHE PATENTSCHRIFT

(11) **EP 4 174 359 B1**
(45) Veröffentlichungstag und Bekanntmachung des Hinweises auf die Patenterteilung: **18.06.2025**
(21) Anmeldenummer: 22203531.3
(22) Anmeldetag: 25.10.2022
(51) Int. Cl.: F17C 3/02, F17C 3/08

(54) **WASSERSTOFFTANK, VERFAHREN ZUM KÜHLEN EINES WASSERSTOFFTANKS UND FAHRZEUG MIT WASSERSTOFFANTRIEB UND WASSERSTOFFTANK**
HYDROGEN TANK, METHOD FOR COOLING HYDROGEN TANK, AND HYDROGEN DRIVE VEHICLE AND HYDROGEN TANK
RÉSERVOIR D'HYDROGÈNE, PROCÉDÉ DE REFROIDISSEMENT D'UN RÉSERVOIR D'HYDROGÈNE ET VÉHICULE À PROPULSION D'HYDROGÈNE ET RÉSERVOIR D'HYDROGÈNE

(30) Priorität: 02.11.2021 DE 102021128436
(43) Veröffentlichungstag der Anmeldung: 03.05.2023
(73) Patentinhaber: ArianeGroup GmbH, 82024 Taufkirchen (DE)
(72) Erfinder: Wendt, Dr. Christian, 28199 Bremen (DE); Isselhorst, Dr. Armin, 28199 Bremen (DE); Konopka, Dr.-Ing. Martin, 28199 Bremen (DE)
(74) Vertreter: Marschall, Stefan

(56) Entgegenhaltungen:
- DE-A1- 102004 035 319
- US-A- 3 304 728
- US-B2- 9 777 889

## Beschreibung

Die vorliegende Erfindung betrifft einen Wasserstofftank. Darüber hinaus betrifft die Erfindung ein Fahrzeug mit einem Wasserstoffantrieb sowie einem Wasserstofftank zu dessen Versorgung.

Wasserstoff findet insbesondere als Energieträger in Industrie und Technik vielfältige Anwendungen. Üblicherweise besteht er aus Ortho-Wasserstoff und Para-Wasserstoff, deren jeweilige Moleküle sich durch einen Spin ihrer Atomkerne unterscheiden. Das natürlicherweise sich mit der Zeit einstellende Gleichgewichtsverhältnis ist dabei temperaturabhängig: Während der Para-Wasserstoff-Anteil bei Temperaturen bis zum Normalsiedepunkt von rund 20K fast 100% beträgt, wächst mit steigender Temperatur der Anteil an Ortho-Wasserstoff und beträgt ab einer Temperatur von etwa 250K rund 75%. Die Umwandlung von Para- in Ortho-Wasserstoff ist dabei endotherm, die umgekehrte Umwandlung demnach exotherm. Beide Umwandlungen erfolgen natürlicherweise langsam, können jedoch durch Katalysatoren beschleunigt werden. In Tanks wird üblicherweise fast ausschließlich Para-Wasserstoff gelagert.

Wie auch bei anderen kryogenen Flüssigkeiten ist die Lagerung von flüssigem Wasserstoff in mobilen wie auch in stationären Tanks jedoch problematisch, weil es bei Wärmeeintrag in den jeweiligen Tank zur Abdampfung des flüssigen Wasserstoffs kommt, wodurch sich der Tankdruck erhöht.

Dem wird üblicherweise insbesondere mit verschiedenen Tankisolierungsmaßnahmen teilweise vorgebeugt; beispielsweise offenbart die Druckschrift DE 10 2019 118 323 A1 einen Tank zur Lagerung von flüssigen oder gasförmigen Stoffen, der einen faserverstärkten Kunststoffmantel mit einer evakuierbaren Sandwichstruktur zur thermischen Vakuum-Isolation umfasst.

Im Automotivbereich werden zur Verringerung von Abdampfverlusten Katalysatoren für die endotherme Para-Ortho-Umwandlung eingesetzt; derartige Tanksysteme sind aus der US 2009/0199574 A1, der US 2011/0302933 A1, der Dissertation "Physikalische und technische Aspekte der Ortho-Para-Umwandlung von Wasserstoff" von J. Essler (Universität Dresden, 2013), der Veröffentlichung "Enhanced dormancy due to para-ortho hydrogen conversion in insulated cryogenic pressure vessels for automotive applications" von K. Peng und R. K. Ahluwalia (in: International Journal of Hydrogen Energy, 38, (2013)) und dem Artikel "Effect of para-ortho conversion on hydrogen storage system performance" von S. Ubaid et al. (in: International Journal of Hydrogen Energy, 39, (2014)) bekannt. Die Katalysatoren können in tankexternen Kühlschilden als zusätzliche Leitungen des Entlüftungssystems ausgebildet sein. Der Tankdruck liegt bei solchen Anwendungen zumeist weit über dem kritischen Druck von Wasserstoff. Der Wasserstoff kann durch Physisorption an porösen Einsätzen im Tankinneren gebunden sein.

Die Verwendung von Kühlschilden für Treibstofftanks ist auch im Bereich der Raumfahrt bekannt. So werden in der Arbeit "Parahydrogen-Orthohydrogen Conversion for Boil-Off Reduction from Space Stage Fuel Systems" von R.M. Bliesner (Master Thesis, Washington State University, (2013)), der Veröffentlichung "Parahydrogen-Orthohydrogen Conversion for Enhanced Vapor-Cooled Shielding of Liquid Oxygen Tanks" von R. M. Bliesner, J. W, Leachman und P. M. Adam (in: Journal of Thermophysics and Heat Transfer, 28 (4), (2014)) sowie in dem Artikel "Parahydrogen-Orthohydrogen Conversion on Catalyst-Loaded Scrim for Vapor-Cooled Shielding of Cryogenic Storage Vessels" von B. P. Pedrow et al. (in: Journal of Thermophysics and Heat transfer, 35 (1), (2021)) Kühlschilde für Flüssigsauerstofftanks beschrieben, die mit Para-Wasserstoffgas gespeist werden und einen Katalysator für die endotherme Para-Ortho-Umwandlung aufweisen. In der Veröffentlichung "Space-based LH2 propellant storage system: subscale ground testsing results" von M.W. Liggett (in: Cryogenics, 33 (4), (1993)) ist ein durch zusätzliche metallische Leitungen realisierter Kühlschild für einen Flüssigwasserstofftank im Raumfahrtbereich offenbart.

Die Druckschrift US 9 777 889 B2 A offenbart einen Tieftemperatur kompatiblen Verbunddruckbehälter, der dampfgekühlte Abschirmung (VCS) verwendet, um Wärmegradienten entlang Stützstrukturen zu minimieren und Wärmebelastungen auf Tieftemperatursysteme zu reduzieren.

Der vorliegenden Erfindung liegt die Aufgabe zugrunde, eine Technik bereitzustellen, mit der eine Lagerung von Flüssigwasserstoff verbessert werden kann. Der Erfindung liegt weiterhin die Aufgabe zugrunde, ein Fahrzeug mit Wasserstoffantrieb zu verbessern.

Die Aufgaben werden gelöst durch einen Wasserstofftank gemäß Anspruch 1, ein Fahrzeug gemäß Anspruch 6 und ein Verfahren gemäß Anspruch 7.

Vorteilhafte Ausführungsformen sind in den Unteransprüchen, der Beschreibung und den Figuren offenbart.

Ein erfindungsgemäßer Wasserstofftank weist eine Tankstruktur auf, die einen Tankraum für Wasserstoff mindestens teilweise begrenzt und einen in Leichtbauweise ausgebildeten Bereich umfasst, in dem ein mit dem Tankraum verbundenes Leitungssystem eines

Druckentlastungssystems ausgebildet ist, das einem Ablassen von gasförmigem Wasserstoff aus dem Tankraum dient. Im Leitungssystem ist dabei mindestens ein Para-Ortho-Katalysator zur beschleunigten Umwandlung von Para- in Ortho-Wasserstoff angeordnet.

Da bei einer solchen endotherm verlaufenden Umwandlung Wärme aus der Umgebung aufgenommen wird, dient der in Leichtbauweise ausgebildete, das Leitungssystem umfassende Bereich der Tankstruktur einer Kühlung seiner Umgebung, weswegen er im Folgenden als ein "Kühlschild" der Tankstruktur bezeichnet wird.

Vermöge des im Kühlschild ausgebildeten Leitungssystems mit Para-Ortho-Katalysator ermöglicht die vorliegende Erfindung eine effektive Kühlung der Tankstruktur, indem die darin enthaltene Wärmeenergie für die endotherme Para-Ortho-Umwandlung zusätzlich genutzt und damit der Tankstruktur entzogen wird. Auf diese Weise kann ein Wärmefluss von außen in den Tankraum minimiert und so eine für eine notwendige Druckentlastung erforderliche Menge an aus dem Wasserstofftank abzulassendem Wasserstoff relativ klein gehalten werden. So werden Abdampfverluste minimiert.

Insbesondere wirkt der Kühlschild eines erfindungsgemäßen Wasserstofftanks somit thermisch isolierend.

Gemäß vorteilhaften Ausführungsformen der vorliegenden Erfindung umfasst die Tankstruktur mindestens eine Teilstruktur, in der mindestens ein evakuierbares oder evakuiertes Hohlvolumen zur Isolation des Tankraumes ausgebildet ist. Vorzugsweise hält eine ein solches Hohlvolumen begrenzende Wandung dabei einem Innendruck im Bereich 0,0001hPa bis 0,01hPa im Hohlvolumen stand. Insbesondere kann die mindestens eine Teilstruktur einen Anschluss an eine Vakuumpumpe zur Evakuierung des mindestens einen Hohlvolumens aufweisen. Die mindestens eine Teilstruktur kann (wie der Kühlschild) in Leichtbauweise ausgebildet sein.

Insbesondere kann eine solche (mindestens ein evakuierbares oder evakuiertes Hohlvolumen aufweisende) Teilstruktur zumindest bereichsweise an einer dem Tankraum zugewandten Seite (also zwischen dem Kühlschild und dem Tankraum) angeordnet sein, und/oder eine solche Teilstruktur kann zumindest bereichsweise an einer vom Tankraum abgewandten Seite des Kühlschildes angeordnet sein (also zwischen dem Kühlschild und einer Außenumgebung des Wasserstofftanks).

Die Leichtbauweise des Kühlschildes und/oder (in entsprechenden Ausführungsformen) der mindestens einen Teilstruktur kann (jeweils) insbesondere mindestens teilweise dadurch realisiert sein, dass der Bereich bzw. die Teilstruktur mindestens teilweise aus einem Schaummaterial gefertigt ist und/oder dass der Bereich bzw. die Teilstruktur z.B. mehrere zumindest bereichsweise voneinander beabstandete (vorzugsweise kraftaufnehmende) Materialschichten umfasst, zwischen denen mindestens ein Hohlraum und/oder eine weitere Materialschicht angeordnet ist, deren Material eine geringere Dichte aufweist als mindestens eine seiner benachbarten Materialschichten; in entsprechenden Ausführungsformen kann mindestens ein solcher Hohlraum das mindestens eine oben genannte evakuierte oder evakuierbare Hohlvolumen sein/bilden.

Eine oder mehrere der Materialschichten kann/können bei solchen Ausführungsformen vorzugsweise mindestens bereichsweise als durchgehendes Flächengebilde ausgebildet sein. Erfindungsgemäß bilden die mehreren Materialschichten eine Sandwichstruktur aus. Die Materialschichten können sich zumindest teilweise in ihrer Materialzusammensetzung voneinander unterscheiden oder zumindest teilweise aus denselben Materialien bestehen. Sofern sie einander berühren, können sie in ihrem Kontaktbereich durch eine Inhomogenität im Materialübergang voneinander unterschieden sein (so dass die Materialschichten separate, also nicht lediglich durch eine abstrakte Grenze gegeneinander abgegrenzte Schichten sind); sie können insbesondere miteinander verklebt oder verschweißt sein.

Der Kühlschild ist vorzugsweise mit einer integrierten Stützstruktur ausgebildet, weist also neben seiner Kühl- bzw. Isolationsfunktion auch eine lasttragende Funktion auf. Damit kann bei einer Verwendung in einem Fahrzeug auf separate Stützstrukturen zumindest teilweise verzichtet werden. Im Vergleich zu anderen Wasserstofftanks ermöglicht eine solche Ausführungsform somit eine Reduktion von Strukturmasse und damit eine Minimierung von Treibstoffverlusten.

Ein Fahrzeug gemäß der vorliegenden Erfindung weist einen Wasserstoffantrieb (also einen Antrieb, der Wasserstoff zumindest als Treibstoffkomponente nutzt) sowie zu dessen Versorgung mit Wasserstoff mindestens einen Wasserstofftank gemäß einer Ausführungsform der vorliegenden Erfindung auf.

Ein Verfahren gemäß der vorliegenden Erfindung dient einem Kühlen der Tankstruktur eines Wasserstofftanks gemäß einer Ausführungsform der vorliegenden Erfindung. Es umfasst ein Durchleiten von gasförmigem Wasserstoff aus dem Tankraum des Wasserstofftanks durch das Leitungssystem sowie ein Ablassen des Wasserstoffs in eine Umgebung des Wasserstofftanks.

Ein Tankinhalt des Tankraums umfasst dabei vorzugsweise außer dem gasförmigen auch flüssigen Wasserstoff mit einem Para-Wasserstoff-Anteil (gegenüber Ortho-Wasserstoff) von mindestens 90%, bevorzugter von mindestens 95%. Beim Durchleiten durch das Leitungssystem des Kühlschildes der Tankstruktur wandelt der im Leitungssystem angeordnete Para-Ortho-Katalysator in einer endothermen Reaktion einen Teil des Para-Wasserstoffs in Ortho-Wasserstoff um. Dadurch wird dem Kühlschild Wärme entzogen und so die Tankstruktur gekühlt.

Bei seinem Einleiten in das Leitungssystem hat der gasförmige Wasserstoff vorzugsweise eine Temperatur im Bereich von 30K bis 70K. Vorzugsweise erfolgt das Durchleiten von gasförmigem Wasserstoff durch das Leitungssystem im Kühlschild, bis der aus dem Leitungssystem austretende Wasserstoff eine Temperatur im Bereich von 50K bis 200K hat (also auf eine solche Temperatur erwärmt ist). Auf diese Weise kann eine zumindest annähernd verlustfreie Lagerung von flüssigem Wasserstoff bei einer Temperatur von etwa 20K im Tankraum erreicht werden.

Insbesondere umfasst ein erfindungsgemäßes Verfahren somit eine Druckentlastung des Wasserstofftanks. Damit kann mit geringen Abdampfverlusten der gasförmige Wasserstoff im Tankraum trotz eines von außen auf den Wasserstofftank wirkenden Wärmeeintrags immer wieder auf ein niedriges Niveau gebracht und dort stabilisiert werden. Die Druckentlastung kann dabei während des Betriebs eines mit Wasserstoff aus dem Wasserstofftank betriebenen Wasserstoffantriebs mehrfach wiederholt werden oder auch kontinuierlich erfolgen.

Vorzugsweise ist der Kühlschild eines erfindungsgemäßen Wasserstofftanks dazu eingerichtet, zumindest bei Temperaturen des Kühlschilds im Bereich von 50K bis 200K Para-Wasserstoff bis zum Erreichen eines Verhältnisses V von Ortho- zu Para-Wasserstoff mittels Katalysator umzuwandeln, das von einem jeweiligen (von der jeweiligen Temperatur T abhängigen) Gleichgewichtsverhältnis G(T) um höchstens 10% oder um höchstens 5% abweicht. Der gemäß einem erfindungsgemäßen Verfahren abgelassene Wasserstoff weist analog vorzugsweise ein Verhältnis V von Ortho-Wasserstoff zu Para-Wasserstoff auf, das von einem jeweiligen (von der jeweiligen Temperatur T abhängigen) Gleichgewichtsverhältnis G(T) um höchstens 10% oder um höchstens 5% abweicht. Es gilt bei derartigen Ausführungsformen also jeweils 0,9G(T) ≤ V bzw. 0,95G(T) ≤ V.

Ein erfindungsgemäßer Wasserstofftank kann insbesondere dazu eingerichtet sein, in einem Fahrzeug (z.B. einem Luft-, Raum-, Boden- und/oder Wasserfahrzeug) mit Wasserstoffantrieb (der also dazu eingerichtet ist, Wasserstoff zumindest als Treibstoffkomponente zu nutzen) verbaut zu werden, oder er kann bereits in einem solchen Fahrzeug verbaut sein. Ein erfindungsgemäßes Fahrzeug kann insbesondere als ein Luft-, Raum-, Boden- und/oder Wasserfahrzeug ausgebildet sein.

Gemäß vorteilhaften Ausführungsformen ist der Tankraum eines erfindungsgemäßen Wasserstofftanks im Wesentlichen dreh- oder rotationssymmetrisch um eine (abstrakte) zentrale Achse ausgebildet. Er kann beispielsweise von einer Tankwand begrenzt sein, die Teil der Tankstruktur ist und entlang einem Prisma oder einem Kreiszylinder ausgebildet ist, und/oder durch mindestens einen dreh- oder rotationssymmetrisch ausgebildete Tankdom, der Teil der Tankstruktur ist und den die zentrale Achse durchstößt. Der Kühlschild kann bei derartigen Ausführungsformen die Tankwand und/oder mindestens einen solchen Tankdom mindestens teilweise umfassen, insbesondere kann dann also das Leitungssystem mindestens teilweise in der Tankwand und/oder dem mindestens einen Tankdom ausgebildet sein.

Das Leitungssystem dient einer effektiven Führung des als Kühlmittel fungierenden gasförmigen Wasserstoffs in der Tankstruktur. Es kann einen oder mehrere durchgehende (unverzweigte) Kühlkanal/ Kühlkanäle umfassen oder mindestens eine Verzweigung/en ausbilden. Dadurch, dass mehrere Materialschichten des Kühlschildes (wie oben erwähnt) eine Sandwichstruktur ausbilden, kann ein derartiges verzweigtes Leitungssystem durch Umrandungen von im Sandwich enthaltenen Zellen ausgebildet sein.

Der Para-Ortho-Katalysator ist vorzugsweise mindestens teilweise als innere Beschichtung zumindest eines Bereichs einer Begrenzung des Leitungssystems ausgebildet. Er kann insbesondere Eisenoxid, Nickel-Silizium, Chromtrioxid und/oder ein poröses magnetisches Material umfassen.

Bezogen auf eine Materialstärke des Kühlschilds (im Querschnitt) kann das Leitungssystem mindestens bereichsweise durch einen mittleren und/oder durch einen äußeren (d.h. vom Tankraum abgewandten) Querschnittsbereich der Tankstruktur verlaufen. Dadurch kann ein effektiver Abtransport von Wärme bei minimalem Bedarf an Abdampfgas und minimalem Bedarf an Strukturmasse realisiert und so der Wärmeeintrag von außen in die Tankstruktur besonders wirksam reduziert werden. Insbesondere kann mindestens ein Teil des Leitungssystems in Ausführungsformen mit prismen- oder kreiszylinderförmiger Tankwand wie oben erwähnt vorzugsweise durch einen mittleren Querschnittsbereich verlaufen, in Ausführungsformen mit mindestens einem von einer zentralen Achse durchstoßenen, dreh- oder rotationssymmetrischen Tankdom vorzugsweise durch einen mittleren oder äußeren Querschnittsbereich.

Erfindungsgemäß ist das Leitungssystem mindestens teilweise durch zwei oder mehr (separate) Materialschichten des Kühlschilds begrenzt, also als hohler Zwischenraum zwischen den mindestens zwei Materialschichten ausgebildet. Insbesondere kann vorzugsweise mindestens eine der Materialschichten Wellen und/oder gegeneinander abgewinkelte (insbesondere entlang Prismen verlaufende) Oberflächen aufweisen, die zumindest zum Teil zumindest einen Bereich des Leitungssystems begrenzen.

Gemäß vorteilhaften Ausführungsformen ist die Tankstruktur, insbesondere vorzugsweise deren Kühlschild mindestens teilweise aus einem Leichtbauwerkstoff gefertigt, beispielsweise aus Kunststoff, faserverstärktem Verbundstoff, Aluminium und/oder mindestens einer Aluminiumlegierung.

Die Tankstruktur kann damit eine besonders geringe Masse aufweisen, so dass ihr Transport (insbesondere in einem Fahrzeug mit einem Wasserstoffantrieb, zu dessen Versorgung der Wasserstofftank dient) besonders energiesparend erfolgen kann.

In entsprechenden Ausführungsformen mit mehreren Materialschichten kann insbesondere mindestens eine der Materialschichten vorzugsweise mindestens teilweise aus faserverstärktem Verbundstoff bestehen; eine solche Schicht aus faserverstärktem Verbundstoff kann insbesondere als Stützstruktur dienen und so eine vorteilhafte lasttragende Ausbildung des Kühlschildes zumindest teilweise bedingen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:

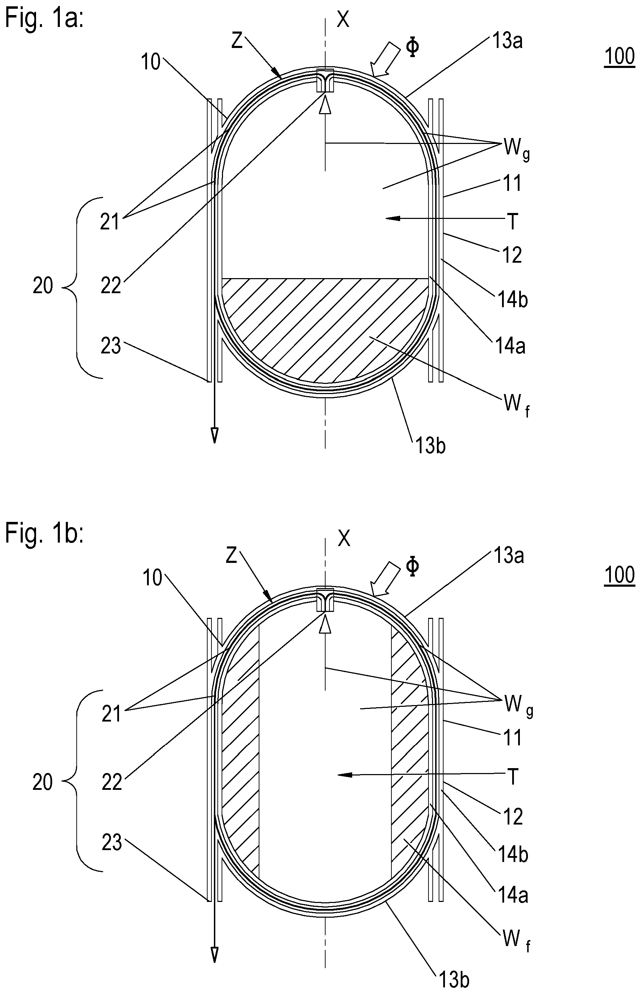

- Fig. 1a:: eine exemplarische Ausführungsform eines erfindungsgemäßen Wasserstofftanks als Tank eines Raumfahrzeugs während einer Schubphase in einem Längsschnitt;
- Fig. 1b:: den Wasserstofftank der Figur 1a während einer ballistischen Flugphase des Raumfahrzeugs;

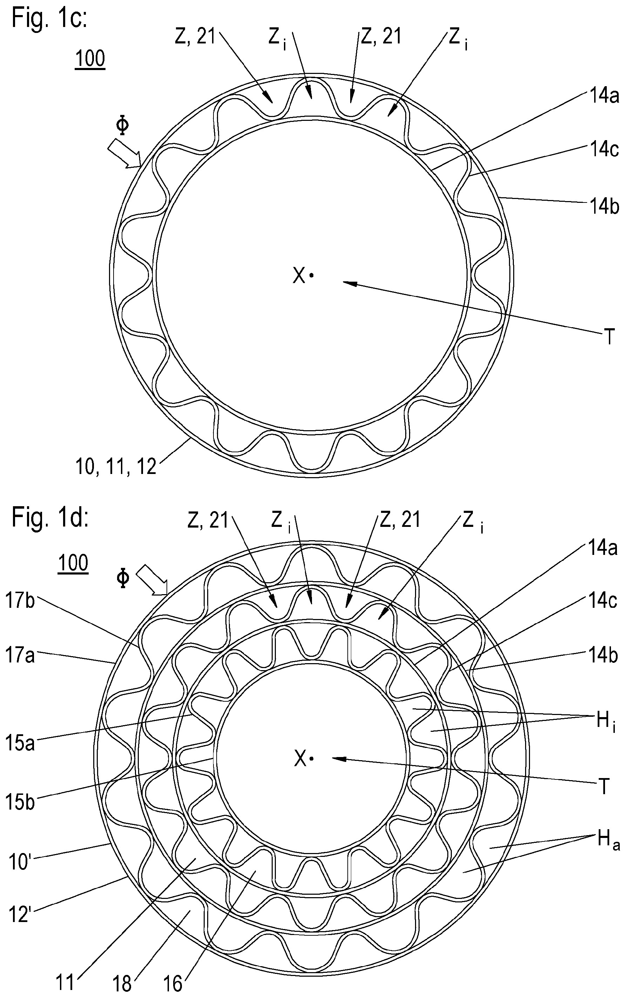

- Fig. 1c:: den erfindungsgemäßen Wasserstofftank der Figuren 1a, 1b im Querschnitt; und
- Fig. 1d:: einen vorteilhaften Wasserstofftank gemäß einer exemplarischen Ausführungsform der vorliegenden Erfindung im Querschnitt.

Die Figur 1a zeigt schematisch einen Wasserstofftank 100 gemäß einem Ausführungsbeispiel der vorliegenden Erfindung. Der Wasserstofftank weist eine Tankstruktur 10 auf, die einen Tankraum T umgibt und begrenzt. Die Tankstruktur 10 umfasst einen Kühlschild 11, in dem ein Leitungssystem 21 eines Druckentlastungssystems 20 ausgebildet ist. Durch dessen Einlass 22 kann gasförmiger Wasserstoff W_{g} aus dem Tankraum in das Leitungssystem 21 einströmen, um dann das Leitungssystem 21 zu durchfließen und durch einen Auslass 23 des Druckentlastungssystems 20 in eine Umgebung des Wasserstofftanks 100 abgelassen zu werden. Im Leitungssystem 21 ist dabei ein (in der Figur nicht sichtbarer) Para-Ortho-Katalysator zur beschleunigten Umwandlung von Para- in Ortho-Wasserstoff angeordnet. Der Para-Ortho-Katalysator ist vorzugsweise als eine Beschichtung zumindest eines Bereichs einer Begrenzung des Leitungssystems 21 im Kühlschild 11 ausgebildet. Er kann insbesondere Eisenoxid, Nickel-Silizium, Chromtrioxid und/oder ein poröses magnetisches Material umfassen, und er sorgt dafür, dass Para-Wasserstoff im durch das Leitungssystem 21 strömenden gasförmigen Wasserstoffs W_{g} teilweise in Ortho-Wasserstoff umgewandelt wird. Da die endotherme Umwandlung dem Kühlschild 11 Wärme entzieht, wird auf diese Weise die Tankstruktur 10 zusätzlich gekühlt und damit ein von außen auf den Wasserstofftank 100 wirkender Wärmefluss Φ zumindest teilweise kompensiert. Damit kann eine zur Regulierung des Tankdrucks notwendige Druckentlastung zur effektiven Kühlung genutzt werden, so dass Abdampfverluste minimiert werden können.

Der Tankraum ist vorliegend rotationssymmetrisch um eine (abstrakte) zentrale Achse X ausgebildet, entlang der geschnitten der Wasserstofftank 100 in der Figur 1a gezeigt ist.

Der Tankraum T ist dabei von einer Tankwand 12 und zwei Tankdomen 13a, 13b begrenzt. Die Tankwand 12 ist entlang einem Kreiszylinder um die zentrale Achse X ausgebildet. Die Tankdome 13a, 13b sind vorliegend jeweils als Kugelabschnitte geformt, die von der zentralen Achse X durchstoßen werden. Der Einlass 22 des Druckentlastungssystems 20 ist dabei vorliegend im Durchstoßbereich der zentralen Achse X durch denjenigen Tankdom 13a angeordnet, der in einer vorgesehenen Einbauausrichtung des Wasserstofftanks in ein (nicht dargestelltes) Fahrzeug einem Tankraumbereich entgegengesetzt ist, in dem sich unter Einfluss der Erdanziehung oder - sofern das Fahrzeug zu Raumfahrtanwendungen eingerichtet ist - unter Einfluss der Trägheit bei Schub der flüssige Wasserstoff W_{f} sammelt: Diese Situation ist in der Figur 1a gezeigt.

Demgegenüber zeigt die Figur 1b den in der vorgesehenen Einbauausrichtung in ein (nicht dargestelltes) Raumfahrzeug eingebauten Wasserstofftank 100 in einer Situation, in der das Raumfahrzeug während einer ballistischen Phase um die zentrale Achse X rotiert: In dieser Situation wird der flüssige Wasserstoff W_{f} aufgrund der Fliehkraft bezogen auf die zentrale Achse X nach radial außen und damit an die Tankwand 12 gedrängt.

In beiden Situationen ist der flüssige Wasserstoff W_{f} vom Einlass 22 des Druckentlastungssystems 20 in das Leitungssystems 21 beabstandet, so dass sein Eindringen in das Leitungssystem verhindert wird.

Die Tankstruktur 10 ist in den Figuren 1a und 1b jeweils vereinfacht mit zwei jeweils flächigen Materialschichten 14a, 14b dargestellt, zwischen denen mindestens ein Zwischenraum Z ausgebildet ist. Damit wird eine Leichtbauweise der Tankstruktur realisiert. Vorzugsweise besteht mindestens eine der flächigen Materialschichten zumindest teilweise aus einem Leichtbaumaterial wie beispielsweise Kunststoff, faserverstärktem Verbundstoff, Aluminium und/oder mindestens einer Aluminiumlegierung. Mindestens eine der Materialschichten kann dem Kühlschild vorzugsweise eine lasttragende Funktion verleihen.

Wie weiterhin in den Figuren 1a und 1b erkennbar ist, bildet der Zwischenraum Z im gezeigten Ausführungsbeispiel zumindest einen Teil des Leitungssystems 21.

In der Figur 1c ist der Wasserstofftank 100 schematisch senkrecht zur zentralen Achse X und im Bereich der Tankwand 12 geschnitten (sowie zur Verdeutlichung des Aufbaus mit geänderten Dimensionen) gezeigt. In dieser Darstellung ist erkennbar, dass zwischen den Materialschichten 14a und 14b eine gewellte Materialschicht 14c als weitere Materialschicht angeordnet ist, deren Wellen im Kontakt mit der weiter außen liegenden Materialschicht 14a sogar eine Mehrzahl an Zwischenräumen Z begrenzen, von denen in der Figur 2 der Übersichtlichkeit halber nur zwei mit Bezugszeichen versehen sind. Im Kontakt mit der (bezogen auf den Tankraum T bzw. die zentrale Achse X) weiter innen angeordnete Materialschicht 14b begrenzt die gewellte Materialschicht 14c weitere Zwischenräume Zᵢ.

Die jeweils äußeren Zwischenräume Z bilden vorliegend zumindest einen Teil des Leitungssystems 21 mit dem (nicht dargestellten) Para-Ortho-Katalysator. Bei einem Durchleiten von gasförmigem Para-Wasserstoff durch das Leitungssystem 21 wird dann also insbesondere die äußere Materialschicht 14b gekühlt und damit ein Wärmefluss Φ von außen mindestens teilweise kompensiert. Alternativ oder zusätzlich können die weiteren Zwischenräume Zᵢ einen Teil des Leitungssystems 21 mit dem Para-Ortho-Katalysator bilden (in der Figur nicht dargestellt).

Insbesondere kann der Para-Ortho-Katalysator einen oder mehrere Bereich/e umfassen, in dem/denen er als jeweilige Beschichtung mindestens eines Teils einer oder mehrerer jeweiliger Wandung/en der Zwischenräume Z und/oder der Zwischenräume Zᵢ ausgebildet ist.

Alternativ zur Wellenform könnte die Materialschicht 14c gegeneinander abgewinkelte Abschnitte umfassen, insbesondere gezackt ausgebildet sein (nicht dargestellt).

Die Figur 1d illustriert schematisch einen besonders vorteilhaften Wasserstofftank 100' gemäß einem weiteren Ausführungsbeispiel der vorliegenden Erfindung in einem Querschnitt. Der Wasserstofftank 100' kann insbesondere kugelförmig ausgebildet sein oder eine kreiszylindrische Tankwand aufweisen; der gezeigte Querschnitt ist vorliegend senkrecht zu seiner zentralen Achse X genommen.

Der Wasserstofftank 100' weist eine Tankstruktur 10' auf, die einen Kühlschild 11 aufweist, der analog zum Kühlschild 11 der in der Figur 1c gezeigten Tankstruktur 100 ausgebildet ist und daher hier ebenso bezeichnet ist und nicht nochmals beschrieben wird.

Darüber hinaus umfasst die Tankstruktur 10' des Wasserstofftanks 100' Materialschichten 15a und 15b jeweils an einer dem Tankraum T zugewandten Seite des Kühlschilds 11 (also zwischen Tankraum T und Kühlschild 11) sowie Materialschichten 17a und 17b an einer vom Tankraum abgewandten Seite des Kühlschilds 11 (bezogen auf den Tankraum also weiter außen als der Kühlschild 11).

Die Materialschichten 15a und 17b sind dabei vorliegend jeweils gewellt ausgebildet, so dass sie im Kontakt mit den jeweils benachbarten Materialschichten 14a, 15b bzw. 14b, 17a und zusammen mit diesen jeweiligen Materialschichten Hohlräume Hₐ, Hᵢ begrenzen, von denen in der Figur 1d der Übersichtlichkeit halber jeweils nur zwei mit Bezugszeichen versehen sind. Die Tankstruktur 10' weist damit (bezogen auf den Tankraum T) innerhalb und außerhalb des Kühlschildes 11 jeweils eine wie der Kühlschild 11 in Leichtbauweise ausgebildete Teilstruktur 16 bzw. 18 auf. Insbesondere umfasst die in der Figur 1d gezeigte Tankstruktur 10' vorliegend drei Wellenplattenkerne, von denen der im Querschnitt mittlere den Kühlschild 11 ausbildet.

Alternativ zur Wellenform könnte/n eine oder mehrere der Materialschichten 14c, 15a, 17b gegeneinander abgewinkelte Abschnitte umfassen, insbesondere gezackt ausgebildet sein (nicht dargestellt).

Gemäß vorteilhaften Ausführungsformen ist/sind einer oder mehrere der Hohlräume Hₐ und/oder ist/sind einer oder mehrere der Hohlräume Hᵢ an eine Vakuumpumpe angeschlossen und bildet/bilden damit jeweils ein evakuierbares Hohlvolumen. Dadurch kann eine besonders gute thermische Isolationswirkung erzielt werden.

Offenbart ist ein Wasserstofftank 100 mit einer mindestens teilweise einen Tankraum T begrenzenden Tankstruktur 10, die einen in Leichtbauweise ausgebildeten Kühlschild 11 umfasst. In dem Kühlschild 11 ist ein mit dem Tankraum T verbundenes Leitungssystem 21 eines Druckentlastungssystems 20 zum Ablassen von gasförmigem Wasserstoff W_{g} aus dem Tankraum T ausgebildet. Im Leitungssystem ist mindestens ein Para-Ortho-Katalysator zur beschleunigten Umwandlung von Para- in Ortho-Wasserstoff angeordnet.

Weiterhin offenbart sind ein Fahrzeug mit einem Wasserstoffantrieb und einem solchen Wasserstofftank 100 sowie ein Verfahren zum Kühlen der Tankstruktur eines solchen Wasserstofftanks.

### Bezugszeichen

- 10: Tankstruktur
- 11: Kühlschild
- 12: Tankwand
- 13a, 13b: Tankdom
- 14a, 14b, 14c: Materialschicht
- 15a, 15b: Materialschicht
- 16: Teilstruktur an dem Tankraum T zugewandter Seite des Kühlschildes 11
- 17a, 17b: Materialschicht
- 18: Teilstruktur an vom Tankraum T abgewandter Seite des Kühlschildes 11

- 20: Druckentlastungssystem
- 21: Leitungssystem
- 22: Einlass
- 23: Auslass

- 100: Wasserstofftank

- Φ: Wärmefluss

- Hᵢ, Hₐ: Hohlraum
- W_{f}: flüssiger Wasserstoff
- W_{g}: gasförmiger Wasserstoff
- T: Tankraum
- X: zentrale Achse
- Z: Zwischenraum
- Zᵢ: innerer Zwischenraum

## Patentansprüche

1. Wasserstofftank (100) mit einer mindestens teilweise einen Tankraum (T) begrenzenden Tankstruktur (10), die einen in Leichtbauweise ausgebildeten, im Folgenden als Kühlschild bezeichneten Bereich (11) umfasst, in dem ein mit dem Tankraum (T) verbundenes Leitungssystem (21) eines Druckentlastungssystems (20) zum Ablassen von gasförmigem Wasserstoff (W_{g}) aus dem Tankraum (T) ausgebildet ist,
wobei im Leitungssystem mindestens ein Para-Ortho-Katalysator zur beschleunigten Umwandlung von Para- in Ortho-Wasserstoff angeordnet ist,
**dadurch gekennzeichnet, dass** der Kühlschild (11) mindestens zwei separate, eine Sandwichstruktur ausbildende Materialschichten (14a, 14b, 14c) aufweist, zwischen denen wenigstens ein hohler Zwischenraum (Z) ausgebildet ist, der zumindest einen Teil des Leitungssystems (21) bildet.

2. Wasserstofftank gemäß Anspruch 1, wobei der Para-Ortho-Katalysator mindestens teilweise als innere Beschichtung zumindest eines Teils einer Begrenzung des Leitungssystems (21) ausgebildet ist.

3. Wasserstofftank gemäß einem der Ansprüche 1 oder 2, wobei mindestens eine der Materialschichten (14c) Wellen und/oder gegeneinander abgewinkelte Oberflächen aufweist, die mindestens teilweise den wenigstens einen Zwischenraum (Z) begrenzen.

4. Wasserstofftank gemäß einem der vorhergehenden Ansprüche, wobei die Tankstruktur 10, 10' zudem eine Teilstruktur (16, 18) aufweist, in der mindestens ein evakuierbares oder evakuiertes Hohlvolumen zur thermischen Isolierung des Tankraumes ausgebildet ist.

5. Wasserstofftank gemäß einem der vorhergehenden Ansprüche, wobei die Tankstruktur mindestens teilweise aus Kunststoff, faserverstärktem Verbundstoff, Aluminium und/oder mindestens einer Aluminiumlegierung gefertigt ist.

6. Fahrzeug mit einem Wasserstoffantrieb, das zur Versorgung des Wasserstoffantriebs mindestens einen Wasserstofftank (100) gemäß einem der vorhergehenden Ansprüche umfasst.

7. Verfahren zum Kühlen der Tankstruktur eines Wasserstofftanks (100) gemäß einem der Ansprüche 1 bis 5, wobei das Verfahren ein Durchleiten von gasförmigem Wasserstoff (W_{g}) aus dem Tankraum (T) des Wasserstofftanks (T) durch das den mindestens einen Para-Ortho-Katalysator enthaltende Leitungssystem (20) sowie ein Ablassen des Wasserstoffs in eine Umgebung des Wasserstofftanks (100) umfasst.

8. Verfahren gemäß Anspruch 7, wobei der gasförmige Wasserstoff (W_{g}) mit einer Temperatur im Bereich von 30K bis 70K aus dem Tankraum in das Leitungssystem (20) eingeleitet wird.

## Claims

1. A hydrogen tank (100) with a tank structure (10) which at least partially delimits a tank chamber (T) and which comprises a region (11) designed using lightweight construction methods, hereinafter designated a cooling shield, in which a conduit system (21) of a pressure relief system (20) which is connected to the tank chamber (T) is formed for discharging gaseous hydrogen (W_{g}) from the tank chamber (T), wherein at least one para-ortho catalyst for the accelerated conversion of parahydrogen into orthohydrogen is disposed in the conduit system,
**characterized in that**
the cooling shield (11) has at least two separate layers of material (14a, 14b, 14c) which form a sandwich structure, between which layers at least one hollow intermediate space (Z), which forms at least a portion of the conduit system (21), is formed.

2. The hydrogen tank as claimed in claim 1, wherein the para-ortho catalyst is at least partially formed as an internal coating of at least a portion of a boundary of the conduit system (21).

3. The hydrogen tank as claimed in one of claims 1 or 2, wherein at least one of the layers of material (14c) has corrugations and/or surfaces which are angled with respect to each other, which at least partially delimit the at least one intermediate space (Z).

4. The hydrogen tank as claimed in one of the preceding claims, wherein the tank structure (10, 10') additionally has a substructure (16, 18) in which at least one hollow volume which can be or is evacuated is formed for the thermal insulation of the tank chamber.

5. The hydrogen tank as claimed in one of the preceding claims, wherein the tank structure is at least partially fabricated from plastic, fibre-reinforced composite, aluminium and/or at least one aluminium alloy.

6. A vehicle with a hydrogen drive, which comprises at least one hydrogen tank (100) as claimed in one of the preceding claims for supplying the hydrogen drive.

7. A method for cooling the tank structure of a hydrogen tank (100) as claimed in one of claims 1 to 5, wherein the method comprises passing gaseous hydrogen (W_{g}) out of the tank chamber (T) of the hydrogen tank (T) through the conduit system (20) containing the at least one para-ortho catalyst, as well as discharging the hydrogen into an environment of the hydrogen tank (100).

8. The method as claimed in claim 7, wherein the gaseous hydrogen (W_{g}) is fed out of the tank chamber into the conduit system (20) at a temperature in the range from 30K to 70K.

## Revendications

1. Réservoir à hydrogène (100), disposant d'une structure (10) de réservoir délimitant au moins partiellement une capacité (T) de réservoir, qui comprend une zone (11) conçue en construction légère, désignée dans la suite en tant que bouclier de refroidissement, dans laquelle est conçu un système de conduites (21) d'un système de détente (20) relié avec la capacité (T) de réservoir, destiné à évacuer de l'hydrogène (W_{g}) gazeux hors de la capacité (T) de réservoir,
dans le système de conduites étant placé au moins un para / ortho catalyseur pour la transformation accélérée de para hydrogène en ortho hydrogène,
**caractérisé en ce que** le bouclier de refroidissement (11) comporte au moins deux couches de matière (14a, 14b, 14c) séparées, constituant une structure en sandwich, entre lesquelles est conçu au moins un espace intermédiaire (Z), qui forme au moins une partie du système de conduites (21).

2. Réservoir à hydrogène selon la revendication 1, le para / ortho catalyseur étant conçu au moins partiellement en tant que revêtement intérieur d'au moins une partie d'une délimitation du système de conduites (21).

3. Réservoir à hydrogène selon l'une quelconque des revendications 1 ou 2, au moins l'une des couches de matière (14c) comportant des ondulations et / ou des surfaces coudées les unes par rapport aux autres, qui délimitent au moins partiellement l'au moins un espace intermédiaire (Z).

4. Réservoir à hydrogène selon l'une quelconque des revendications précédentes, la structure (10, 10') de réservoir comportant par ailleurs une structure partielle (16, 18), dans laquelle est conçu au moins un volume creux évacuable ou évacué, destiné à l'isolation thermique de la capacité de réservoir.

5. Réservoir à hydrogène selon l'une quelconque des revendications précédentes, la capacité de réservoir étant fabriquée au moins partiellement en matière plastique, en matière composite renforcée par fibres, en aluminium et / ou au moins en un alliage d'aluminium.

6. Véhicule équipé d'une propulsion à hydrogène, qui pour l'alimentation de la propulsion à hydrogène comprend au moins un réservoir à hydrogène (100) selon l'une quelconque des revendications précédentes.

7. Procédé, destiné à refroidir la structure de réservoir d'un réservoir à hydrogène (100) selon l'une quelconque des revendications 1 à 5, le procédé comprenant une opération consistant à faire passer de l'hydrogène gazeux (W_{g}) à partir de la capacité (T) de réservoir du réservoir à hydrogène (T) à travers le système de conduites (20) contenant l'au moins un para / ortho catalyseur, ainsi qu'une évacuation de l'hydrogène dans un environnement du réservoir à hydrogène (100).

8. Procédé selon la revendication 7, l'hydrogène gazeux (W_{g}) étant introduit à une température de l'ordre de 30K à 70K à partir de la capacité de réservoir dans le système de conduites (20).
